# EUROPÄISCHE PATENTANMELDUNG

(11) **EP 0 991 283 A1**
(43) Veröffentlichungstag der Anmeldung: **05.04.2000**
(21) Anmeldenummer: 98118584.6
(22) Anmeldetag: 01.10.1998
(51) Int. Cl.: H04Q 3/00

(54) **Verfahren zur Behandlung von In-Calls bei IN-Dienstrufnummernportabilität**

(71) Anmelder: SIEMENS AKTIENGESELLSCHAFT, 80333 München (DE)
(72) Erfinder: Zygan-Maus, Renate, Dr. rer. nat., 81477 München (DE); Ruckstuhl, Hans Peter, Dipl.-Ing., 82515 Wolfratshausen (DE)

(57) **Zusammenfassung**

Der Erfindung liegt die Aufgabe zugrunde, ein Verfahren zur Behandlung von IN-Calls anzugeben, durch das eine Bereitstellung von IN-Dienstrufnummernportabilität ohne zusätzliche Kapazitätsanforderungen an die Vermittlungsstellen (1) oder die IN-Dienstplattformen (3) des öffentlichen Telefonnetzes ermöglicht wird. Diese Aufgabe wird durch ein Verfahren mit einem erfindungsgemäßen NP-Server (2) ermöglicht.

Der NP-Server (2) ermittelt anhand der in der IN-Abfrage enthaltenen Informationen welcher Netzbetreiber den IN-Call unterstützt und leitet die Abfrage transparent weiter.

Die weitergeleitete Abfrage wird von dem empfangenden SCP (3) auf die gleiche Weise bearbeitet wie eine Abfrage, die direkt von der Vermittlungsstelle (1) kommt.

## Beschreibung

Im Rahmen der Öffnung der Märkte für öffentliche Telekommunikationsdienste wird in vielen Ländern die Rufnummernportabilität auch für IN-Dienstrufnummern gefordert, d.h. IN-Dienstteilnehmer können ihre IN-Dienstrufnummer behalten, wenn sie zu einem anderen Netzbetreiber/Dienstanbieter wechseln. Betreiber eines öffentlichen Netzes müssen in der Lage sein, Rufe (Calls) zu einzelnen IN-Dienstrufnummern zu demjenigen (Intelligenten) Netz zu routen, von dem diese IN-Dienstrufnummer unterstützt wird. Bisher bekannte Lösungen können zu Kapazitätsproblemen bei den IN-Diensteplattformen (Service Control Point SCP) oder in den Vermittlungsstellen des Basisnetzes führen (Erläuterung: Ein Intelligentes Netz (IN) kann als ein um die IN-Funktionen Service Switching Function SSF, Service Control Function SCF, Service Management Function SMF und die entsprechenden Schnittstellen zum Basisnetz erweitertes Basisnetz verstanden werden. Ein IN-Call erfordert also im Unterschied zum Basic-Call nicht nur die Basis-Netz-Funktionalität sondern auch die speziellen IN-Funktionen).

Normale IN-Dienste sind solche, bei denen die zum Verbindungsaufbau gewählte öffentliche Nummer den IN-Dienstteilnehmer bereits eindeutig identifiziert. Dies ist bei gewählten IN-Diensten in der Regel der Fall. Mögliche Sonderformen von gewählten IN-Diensten, bei denen die IN-Dienstteilnehmerrufnummer erst nach Erreichen des IN-Dienstes mithilfe eines Dialoges über den Nutzkanal abgefragt wird, können im Prinzip nach dem Empfang der IN-Dienstteilnehmerrufnummer ebenfalls wie die normalen IN-Dienste weiterbehandelt werden.

Bisherige Lösungen für IN-Dienstrufnummernportabilität können in zwei Kategorien eingeteilt werden:
A. Lösungen mit Rückwirkungen auf die eigene IN-Diensteplattform
B. Lösungen mit Abfrage eines Rufnummernportabilitätsservers vor einer Abfrage der eigenen IN-Diensteplattform

### Zu A:

Bei diesen Lösungen wird vom Basisnetz für alle IN-Dienstrufnummern (solche, die von der eigenen IN-Diensteplattform unterstützt werden und solche, die von Dienstplattformen in fremden Netzen unterstützt werden) eine normale IN-Abfrage zur eigenen IN-Diensteplattform durchgeführt. Die IN-Diensteplattform stellt fest, ob sie die gewählte IN-Dienstrufnummer unterstützt oder ob die gewählte IN-Dienstrufnummer von einem anderen Netz unterstützt wird. In beiden Fällen weist die IN-Diensteplattform die anfragende Basisnetzvermittlungsstelle über die existierende IN-Signalisierung an, wie der Ruf weiterzubehandeln ist. Beispielsweise kann die IN-Diensteplattform die Vermittlungsstelle anweisen, den Ruf an das zuständige Netz weiterzuvermitteln, indem sie eine Netzkennung ermittelt und der Vermittlungsstelle als Routinginformation mitteilt.

Bei Lösungen vom Typ A wird die Kapazität der IN-Diensteplattform teilweise für die Behandlung fremder IN-Dienstrufnummern verbraucht, was zu Kapazitätsengpässen für die Behandlung der eigenen IN-Dienstrufnummern führen kann. Da das Basisnetz denselben Triggermechanismus für eigene und für fremde IN-Dienstrufnummern verwendet, dürfen Lastbegrenzungsprozeduren für die Abfragen der IN-Diensteplattform in den Vermittlungsstellen (Call Gapping Funktionen), die auch fremde IN-Dienstrufnummern betreffen würden (z.B. eine dienstbezogene Lastbegrenzung) nicht verwendet werden.

### Zu B:

Um sicherzustellen, daß die eigene IN-Diensteplattform nur eigene IN-Dienstrufnummern behandeln muß, wird vom Basisnetz für jede gewählte IN-Dienstrufnummer ein besonderer Rufnummernportabilitätsserver (NP-Server; NP = Number Portability) über die IN-Signalisierung angefragt. Der NP-Server stellt fest, ob die gewählte IN-Dienstrufnummer im eigenen Netz unterstützt wird oder in einem anderen Netz. Der NP-Server weist die abfragende Vermittlungsstelle über die IN-Signalisierung an, wie der Ruf weiterzubehandeln ist. Für eigene IN-Dienstrufnummern führt das Basisnetz nach der Abfrage beim NP-Server eine normale IN-Abfrage zur eigenen IN-Dienstplattform durch. Für fremde IN-Dienstrufnummern wird der Ruf entsprechend der Anweisung des NP-Servers zum zuständigen fremden Netz geroutet.
Bei Lösungen vom Typ B wird die Kapazität der eigenen IN-Dienstplattform geschont, aber dafür zusätzliche Basisnetzkapazität für die vorgeschaltete Abfrage bei einem besonderen NP-Server benötigt. Bei Verwendung von entkoppelten Triggermechanismen für die vorgeschaltete Abfrage beim NP-Server und für die nachfolgende Abfrage bei der eigenen IN-Diensteplattform können Dienst- und Rufnummernbezogenen Lastbegrenzungsprozeduren für die IN-Diensteplattform (Call Gapping Funktionen) in den Vermittlungsstellen uneingeschränkt benutzt werden.

Der Erfindung liegt die Aufgabe zugrunde, ein Verfahren zur Behandlung von IN-Calls anzugeben, durch das eine Bereitstellung von IN-Dienstrufnummernportabilität ohne zusätzliche Kapazitätsanforderungen an die Vermittlungsstellen oder die IN-Diensteplattformen des öffentlichen Telefonnetzes ermöglicht wird.

Im folgenden wird ein Ausführungsbeispiel der Erfindung anhand der Zeichnung beschrieben, wobei die Zeichnung zwei Figuren umfaßt.

Von einem NP-Server wird eine nachfolgend näher erläuterte Rufnummernportabilitätsfunktion erbracht, die von einer Vermittlungsstelle des Basisnetzes durch eine normale IN-Abfrage angestoßen wird, und die diese IN-Abfrage an eine IN-Dienstplattform des eigenen Netzes weiterleiten kann, wenn es sich um eine Abfrage zu einer eigenen IN-Dienstrufnummer handelt.

Durch das erfindungsgemäße Verfahren wird weder in den Vermittlungsstellen des Basisnetzes noch in den IN-Diensteplattformen zusätzliche Kapazität benötigt.

Bei Anwendung des erfindungsgemäßen Verfahrens können die IN-Lastbegrenzungsprozeduren in den Vermittlungsstellen für IN-Abfragen an die IN-Diensteplattformen (Call Gapping Funktionen), allerdings nicht mehr verwendet werden, da sie auch fremde IN-Dienstrufnummern betreffen könnten. Anstelle der Lastbegrenzungsprozeduren in den Vermittlungsstellen können andere Lastbegrenzungsmechanismen eingesetzt werden, z.B. im NP-Server.

Bei der nunmehr folgenden näheren Erläuterung des erfindungsgemäßen Verfahren wird das standardisierte Signalisierungssystem #7 als dem Intelligenten Netz beispielhaft zugrundeliegendes Signalisierungssystem angenommen. Die Erfindung ist jedoch auch bei Verwendung anderer Signalisierungsverfahren als dem Verfahren nach #7 zum Transport der Anwendungsdaten (TCAP, INAP) anwendbar. Bei Verwendung von IP (Internet Protokolle) wäre anstatt des SCCP-GlobalTitles die IP-Addresse zu bewerten und zu manipulieren (Anmerkung: Es gibt bereits Beispiele, wo zum Transport von Anwendungsdaten in herkömmlichen Telecommunikationsnetzen (PSTN, PLMN) IP verwendet wird.

Eine Vermittlungsstelle des Basisnetzes erkennt eine gewählte IN-Dienstrufnummer. Wenn ausreichend viele gewählte Ziffern vorliegen, um den IN-Dienstteilnehmer eindeutig zu identifizieren, sendet die Vermittlungsstelle eine IN-Abfrage (enthält die gewählte IN-Dienstrufnummer) gemäß der normalen IN-Signalisierung ihres Netzes an einen erfindgsgemäßen NP-Server. Für die Vermittlungsstelle ist die Umleitung der Nachricht über den NP-Server transparent, d.h. die Vermittlungsstelle 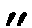 denkt", daß sie die IN-Abfrage an eine IN-Diensteplattform stellt.

Bei Verwendung von z.B. ETSI-Signalisierungsstandards sendet die Vermittlungsstelle die folgende SCCP/TCAP-Meldung: SCCP/TCAP-Meldung 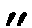 UNIT-DATA/BEGIN", die die INAP-Operation 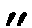 InitialDP" mit den Parametern
- servicekey = IN-Dienstekennung (z.B. für Persönliche Rufnummer)
- calledPartyNumber = gewählte IN-Dienstrufnummer enthält.

Die SCCP-Adresse des NP-Servers ist in der Vermittlungsstelle als Global Title X gespeichert.

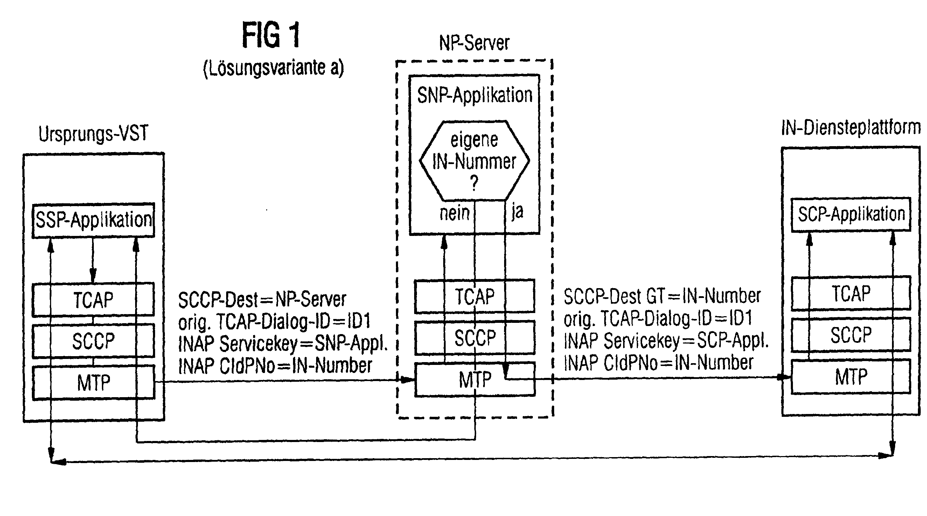

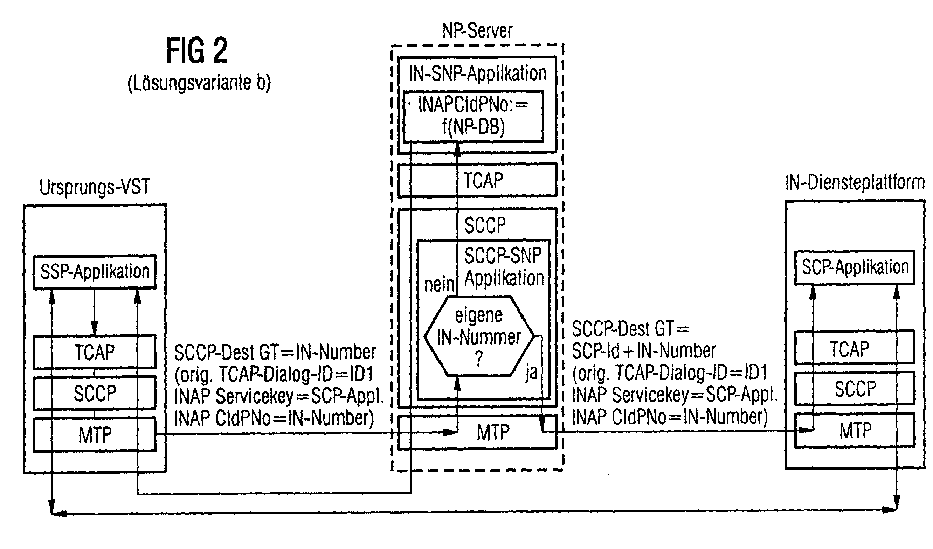

Für den weiteren Ablauf des Verfahren können zwei Varianten Anwendung finden, die im folgenden als (Lösungs-)Variante a) und b) bezeichnet werden, wobei deren Erläuterung durch der Figur 1 (Variante a)) und der Figur 2 (Variante b)) unterstützt wird.

### Variante a):

Im NP-Server wird die INAP-Meldung ausgewertet und aufgrund des Parameters servicekey wird zu einem speziellen IN-Dienstrufnunmmernportabilitätsprogramm (SNP Applikation, wobei SNP = Service Number Portability) verzweigt. Dieses Programm prüft, von welchem Netzbetreiber die gewählte IN-Dienstrufnummer unterstützt wird. Wird die IN-Dienstrufnummer von einem fremden Netz unterstützt, ermittelt der NP-Server die erforderliche Routing-Information (z.B. die Netzkennung eines Gateway-Knotens zu dem fremden Netz) und weist die abfragende Vermittlungsstelle an, den Ruf zu diesem Gateway zu routen.

Bei Verwendung von ETSI - Signalisierungsstandards sendet der NP-Server in diesem Fall an die Vermittlungsstelle z.B. die folgende SCCP/TCAP-Meldung:
Innerhalb einer SCCP/TCAP-Meldung UNIT-DATA/END die INAP-Operation Connect mit den Parametern
   - destinationRoutingAddress = Netzkennung
   - cutAndPaste = 0.

Wird die IN-Dienstrufnummer vom eigenen Netz unterstützt, ermittelt der NP-Server aus der IN-Dienstrufnummer eine SCCP-Adresse für die zuständige eigene IN-Diensteplattform; z.B. kann die IN-Dienstrufnummer selbst als Global Title für die SCCP-Adressierung der IN-Diensteplattform verwendet werden. Der NP-Server leitet die ursprüngliche Meldung der Vermittlungsstelle über das #7-Signalisierungsnetz an die zuständige eigene IN-Diensteplattform weiter. Der NP-Server kann die Weiterleitung der Meldung von IN-Dienstplattform-bezogenen Überlaststeuerungskriterien abhängig machen. Kann eine Meldung nicht weitergeleitet werden, kann der NP-Server die absendende Vermittlungsstelle anweisen, den Ruf auszulösen.

Bei Verwendung von z.B. ETSI - Signalisierungsstandards sendet die NP-Server die folgende SCCP/TCAP-Meldung:
Innerhalb einer SCCP/TCAP-Meldung UNIT-DATA/BEGIN die INAP-Operation InitialDP mit den Parametern
   - servicekey = IN-Dienstekennung (z.B. für Persönliche Rufnummer)
   - CalledPartyNumber = gewählte IN-Dienstrufnummer.

Auch auf der TCAP-Ebene bleibt die ursprüngliche Meldung unverändert. Insbesondere verwendet der NP-Server dieselbe von der Vermittlungsstelle vergebene TCAP-Dialog-ID. Auf der SCCP-Ebene gibt der NP-Server als Ziel-Adresse die ermittelte neue SCCP-Adresse an, z.B. den SCCP-GlobalTitle = gewählte IN-Dienstrufnummer. Als Ursprung der Meldung gibt der NP-Server die in der ursprünglichen Meldung empfangene SCCP-Adresse der abfragenden Vermittlungsstelle an.

Die Umleitung der Nachricht durch den NP-Server ist für die IN-Diensteplattform somit transparent, d.h. die IN-Diensteplattform 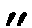 denkt", daß sie die IN-Abfrage direkt von der Vermittlungsstelle erhalten hat. Die IN-Diensteplattform bearbeitet die IN-Abfrage daher wie eine direkte IN-Abfrage der Vermittlungsstelle und sendet eine entsprechende Antwort an die Vermittlungsstelle.

### Variante b):

Im NP-Server wird bereits die SCCP-Meldung ausgewertet; ein spezielles SCCP-Dienstrufnummernportabilitätsprogramm (SCCP-SNP-Applikation) prüft, zu welchem Netzbetreiber die SCCP-Adresse, welche im SSP aus der gewählten IN-Dienstrufnummer abgeleitet wurde, gehört.

(Einschub: Wegen der grossen Datenmenge, wird das SNP-Programm und zugehörige Daten am besten an zentraler Stelle angesiedelt. Hierzu bietet sich die Integration mit einem Signalling Transfer Point/Signalling Relay Point (STP/SPR), eventuell auch mit einem SCP an. Die Integration mit dem SSP ist auch möglich, allerdings weniger attraktiv)

Gehört die SCCP-Adresse bzw. IN-Dienstrufnummer zu einem fremden Netz, wird die INAP-Meldung via TCAP an ein IN-Dienstrufnummernportabilitätsprogramm weitergeleitet. Dieses prüft, von welchem Netzbetreiber die gewählte IN-Dienstrufnummer unterstützt wird, ermittelt die erforderliche Routing-Information und weist die abfragende Vermittlungsstelle an, den Ruf in dieses Netz zu routen (siehe Variante 2a).

Wird die SCCP-Adresse bzw. IN-Dienstrufnummer hingegen vom eigenen Netz unterstützt, ermittelt der NP-Server aus der SCCP-CdPN eine neue SCCP-Adresse für die zuständige eigene IN-Diensteplattform. Der NP-Server leitet die ursprüngliche Meldung der Vermittlungsstelle über das #7-Signalisierungsnetz an die zuständige eigene IN-Diensteplattform weiter. Diese Lösungsvariante erlaubt die Weiterleitung der SCCP/TCAP-Meldung ohne Einbeziehung der TCAP- und Applikationsebene und ist damit dynamisch günstiger als die Variante 2a.

Für die beiden genannten Varianten gilt gleichermaßen folgendes:

Eine IN-Diensteplattform erhält die vom NP-Server umgeleitete IN-Abfrage der Vermittlungsstelle. Die Umleitung der Nachricht über den NP-Server ist für die IN-Diensteplattform transparent, d.h. die IN-Diensteplattform 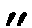 denkt", daß sie die Nachricht direkt von einer anfragenden Vermittlungsstelle erhalten hat. Die IN-Diensteplattform bearbeitet die IN-Abfrage somit wie eine direkte IN-Abfrage der Vermittlungsstelle und sendet die Antwort auf die IN-Abfrage daher auch an die Vermittlungsstelle und nicht an den NP-Server.

Für die Vermittlungsstelle ist die Umleitung der Nachricht über den NP-Server ebenfalls transparent. Der von der Vermittlungsstelle initiierte TCAP-Dialog wird mit der IN-Diensteplattform entsprechend den standardisierten TCAP-Prozeduren geführt.

## Patentansprüche

1. Verfahren zur Behandlung von IN-Calls, demgemäß
- von einer Vermittlungsstelle mit SSP-Funktionalität nach dem Erkennen eines IN-Calls zu diesem IN-Call eine IN-Abfrage erzeugt und an das IN gesendet wird, wobei die genannte IN-Abfrage vom einem bestimmten Server, einem sogenannten NP-Server, empfangen wird,
- von dem genannten NP-Server anhand der in der IN-Abfrage enthaltenen Informationen ermittelt wird, welcher Netz-Betreiber den IN-Call unterstützt,
- von dem genannten NP-Server die IN-Abfrage an einen entsprechenden SCP des ermittelten Netz-Betreibers transparent weitergeleitet wird, wenn es sich bei dem ermittelten Netzbetreiber um denjenigen Netz-Betreiber handelt, innerhalb dessen Netz der IN-Call initiiert wurde,
- die weitergeleitete IN-Abfrage von dem SCP auf die gleiche Weise bearbeitet wird wie eine IN-Abfrage, die direkt von der genannten Vermittlungsstelle kommt.

2. Verfahren zur Behandlung von IN-Calls, demgemäß
- von einer Vermittlungsstelle mit SSP-Funktionalität nach dem Erkennen eines IN-Calls zu diesem IN-Call eine IN-Abfrage erzeugt und an das IN gesendet wird, wobei die genannte IN-Abfrage vom einem bestimmten Server, einem sogenannten NP-Server, empfangen wird,
- von dem genannten NP-Server anhand der in der IN-Abfrage enthaltenen Informationen ermittelt wird, welcher Netz-Betreiber den IN-Call unterstützt,
- von dem genannten NP-Server die IN-Abfrage an einen entsprechenden SCP des ermittelten Netz-Betreibers transparent weitergeleitet wird, wenn der ermittelte Netz-Betreiber bzw. Dienstanbieter zur Diensteabwicklung innerhalb des Netzes, welches den IN-Call initiiert hat, berechtigt ist,
- die weitergeleitete IN-Abfrage von dem SCP auf die gleiche Weise bearbeitet wird wie eine IN-Abfrage, die direkt von der genannten Vermittlungsstelle kommt.

3. Verfahren nach Anspruch 1 oder 2,
**dadurch gekennzeichnet**, daß
zu der genannten Ermittlung des Netz-Betreibers der INAP-Teil der Signalisierungs-Meldung ausgewertet wird.

4. Verfahren nach Anspruch 1 oder 2,
**dadurch gekennzeichnet**, daß
zu der genannten Ermittlung des Netz-Betreibers der SCCP-Teil der Signalisierungs-Meldung ausgewertet wird.

5. Verfahren nach einem der Ansprüche 1 bis 4,
**dadurch gekennzeichnet**, daß
die IN-Abfrage über das Signalisierungssystem Nr.7 übermittelt wird.

6. Verfahren nach einem der Ansprüche 1 bis 4,
**dadurch gekennzeichnet**, daß
die IN-Abfrage über ein IP-basiertes Netz übermittelt wird.

7. Verfahren nach einem der Ansprüche 1 bis 6,
**dadurch gekennzeichnet**, daß
- von dem genannten NP-Server die IN-Abfrage durch die Angabe von Routing-Information zu einem Gateway des ermittelten Netzbetreibers beantwortet wird, wenn es sich bei dem ermittelten Netzbetreiber nicht um denjenigen Netz-Betreiber handelt, innerhalb dessen Netz der IN-Call initiiert wurde,
- von der Vermittlungsstelle der IN-Call zu dem genannten Gateway weitergeleitet wird.

8. NP-Server, der
- eine IN-Abfrage von einer Vermittlungsstelle empfängt,
- anhand der in der IN-Abfrage enthaltenen Informationen ermittelt, welcher Netz-Betreiber den IN-Call unterstützt,
- die IN-Abfrage an einen entsprechenden SCP des ermittelten Netz-Betreibers weiterleitet, wenn es sich bei dem ermittelten Netzbetreiber um denjenigen Netz-Betreiber handelt, innerhalb dessen Netz der IN-Call initiiert wurde.

9. NP-Server, der
- eine IN-Abfrage von einer Vermittlungsstelle empfängt,
- anhand der in der IN-Abfrage enthaltenen Informationen ermittelt, welcher Netz-Betreiber den IN-Call unterstützt,
- die IN-Abfrage an einen entsprechenden SCP des ermittelten Netz-Betreibers weiterleitet, wenn es wenn der ermittelte Netz-Betreiber zur Diensteabwicklung innerhalb des Netzes, welches den IN-Call initiiert hat, berechtigt ist.

10. NP-Server nach Anspruch 8 oder 9
**dadurch gekennzeichnet**, daß
er die IN-Abfrage durch die Angabe von Routing-Information zu einem Gateway des ermittelten Netzbetreibers beantwortet,
wenn es sich bei dem ermittelten Netzbetreiber nicht um denjenigen Netz-Betreiber handelt, innerhalb dessen Netz der IN-Call initiiert wurde,
